# EUROPÄISCHE PATENTSCHRIFT

(11) **EP 0 800 035 B1**
(45) Veröffentlichungstag und Bekanntmachung des Hinweises auf die Patenterteilung: **19.06.2002**
(21) Anmeldenummer: 97104816.0
(22) Anmeldetag: 21.03.1997
(51) Int. Cl.: F21S 11/00, G02B 5/10, G02F 1/19

(54) **Richtungsselektives Reflektionssystem zur Abschattung des direkten Sonnenlichts für Verglasungen**
Shading system for glazing to block direct sunlight from predefined orientations
Système d'ombrage pour vitrages contre la lumière directe du soleil d'une orientation prédefinie

(30) Priorität: 02.04.1996 DE 19613222
(43) Veröffentlichungstag der Anmeldung: 08.10.1997
(73) Patentinhaber: Frauenhofer-Gesellschaft zur Förderung der angewandten Forschung e.V., D-80636 München (DE)
(72) Erfinder: Goetzberger, Adolf, Prof. Dr., 79249 Merzhausen (DE)

(56) Entgegenhaltungen:
- DE-A- 1 949 865
- US-A- 2 565 514
- US-A- 4 003 638
- US-A- 4 240 692
- US-A- 4 475 536
- US-A- 4 773 733
- US-A- 5 220 462

## Beschreibung

### Stand der Technik

Die Erfindung betrifft eine Anordnung, mit der man die direkte Sonnenstrahlung bei insbesondere südorientierten Verglasungen abschatten und gleichzeitig die Transparenz für diffuses Himmelslicht weitgehend aufrechterhalten kann.

Verglaste Aperturen in Gebäuden dienen zur bestmöglichen Einleitung des Tageslichts in die dahinter liegenden Räume. In den meisten Fällen ist jedoch direktes Sonnenlicht in den Räumen unerwünscht, da es zu Blendung, zum Ausbleichen von Möblierung und Textilien und im Sommer zu Überhitzung führt. Hieraus entsteht ein Dilemma, das schon seit langem in der Architektur mehr oder weniger erfolgreich angegangen wurde. Die traditionelle Lösung setzt auf der Südseite der Gebäude Dachüberstände ein, die die Sonnenstrahlung im Sommer abschatten und im Winter die schrägstehende Sonne in die Räume einlassen. Der Nachteil dieser Technik besteht darin, daß ein großer Teil des Himmels permanent abgeschattet wird und dass daher bei bewölktem Himmel nicht genug Licht in die Räume gelangt. Ferner ist die jahreszeitliche Abschattung von der Fensterhöhe abhängig. Diese Methode ist bei Ost- und Westseiten nicht anwendbar. Die darüber hinaus gebräuchliche Methode des Sonnenschutzes besteht in beweglichen Elementen, wie Vorhängen, Jalousien und Rollos. Diese müssen manuell oder automatisch betätigt werden und führen zu einer weitgehenden Verdunklung der Räume. Dadurch tritt der unbefriedigende Effekt auf, daß in Zeiten besonders hellen Tageslichts die Innenräume zu dunkel sind. In den letzten Jahren wurden weitergehende technische Lösungen entwickelt und eingesetzt. Reflektierende Profile, totalreflektierende Prismen und Hologramme wurden angewandt. Der moderne Stand der Technik ist im Tagungsband OTTI (Ostbayerisches Technologie Transfer Institut, Regensburg): Innovative Lichttechnik in der Architektur, 1994, beschrieben. Die neuen Techniken gestatten jedoch auch nur eine ausreichende Kontrolle des direkten Sonnenlichts, wenn sie dem Sonnenstand mechanisch nachgeführt werden.

*Aus der US-A-4,773,733, die den nächstliegenden Stand der Technik entspricht, ist weiterhin eine Jalousie bekannt, bei der das direkt einfallende Sonnenlicht von dem zu beleuchtenden Raum wegreflektiert werden soll. Die Jalousiestreifen werden zur Nachführung nach dem Sonnenstand rotiert. Auf diese Weise wird der Raum nur mit indirekter Solarstrahlung beleuchtet. Die Nachführung einer Verschattungseinrichtung ist aber aufwendig und daher nachteilig.*

Darüber hinaus haben metallisch reflektierende Oberflächen den Nachteil, dass sie das Licht nur mit einem Wirkungsgrad von 90-95% reflektieren. Die nicht absorbierte Energie wird als Wärme freigesetzt, wodurch bei innenliegenden Elementen leicht Überhitzung auftritt. Wesentlich besser ist die Totalflexion in brechenden Medien, die fast verlustfrei ist.

### Beschreibung der Erfindung:

Die hier beschriebene Erfindung zeigt, wie mit stationären Elementen das direkte Sonnenlicht für einen vorgegebenen Zeitraum des Jahres reflektiert oder absorbiert werden kann bei gleichzeitiger weitgehender Durchlässigkeit für einen großen Teil des diffusen Himmelslichts.

Es werden Prinzipien herangezogen, die für die Konzentration der Sonnenstrahlung entwickelt wurden. Im Gegensatz zur energetischen Nutzung der Sonnenstrahlung wird jedoch in diesem Fall das direkte Sonnenlicht erst gesammelt und dann zurückreflektiert, wobei jedoch ein möglichst großer Anteil des diffusen Tageslichts transmittiert werden soll.

Als Ausgangspunkt dienen die nichtabbildenden Konzentratoren, deren Prinzipien in dem Standardwerk von Welford und Winston (W. T. Welford, R. Winston, The Optics of Nonimaging Concentrators, Academic Press 1978) und in dem neueren Werk von A. Luque (A. Luque, Solar Cells and Optics for Photovoltaic Concentration, Bristol, Adam Hilfer, 1989) beschrieben werden. Für die neue Anwendung auf Abschattungen werden die gleichen Prinzipien eingesetzt, jedoch sind die Funktion und die Kriterien für die Optimierung deutlich verschieden.
⇒ Bei *Konzentratoren* ist das Ziel, möglichst alles Licht aus einem vorgegebenen Raumwinkel des Himmels auf den Absorber zu konzentrieren. Dabei ergibt sich aus theoretischen Überlegungen, dass die Grenze zwischen Akzeptanzwinkelbereich des Konzentrators und dem Bereich, in dem die Strahlung zurückgeworfen wird, möglichst scharf sein soll.
⇒ Bei den *Abschattungselementen* ist das Ziel, neben der Reflexion unerwünschter Direktstrahlung möglichst viel Tageslicht in ein Gebäude zu transmittieren. Ferner sind bei Tageslicht die Anforderungen an die Perfektion der Lichtansammlung stark reduziert, insbesondere sind Übergangsbereiche zwischen Zeiten voller Abschattung des Sonnenlichts (im Sommer) und voller Transmission (im Winter) erwünscht. Die Auslegung der Elemente ist auch dadurch verschieden, dass der Abschattungseffekt nur zu bestimmten Jahres- und Tageszeiten erforderlich ist.

In der hier beschriebenen Erfindung werden modifizierte Konzentratoren vom Typ der CPCs (Compound Parabolic Concentrators) eingesetzt. Während bei den gebräuchlichen Konzentratoren das eingesammelte Licht auf einen Absorber gelenkt und in Nutzenergie umgewandelt wird, wird hier das gesammelte Licht durch einen Reflektor an der Stelle des Absorbers wieder zurückgeworfen. Das ist möglich, da die Strahlengänge völlig reversibel sind.

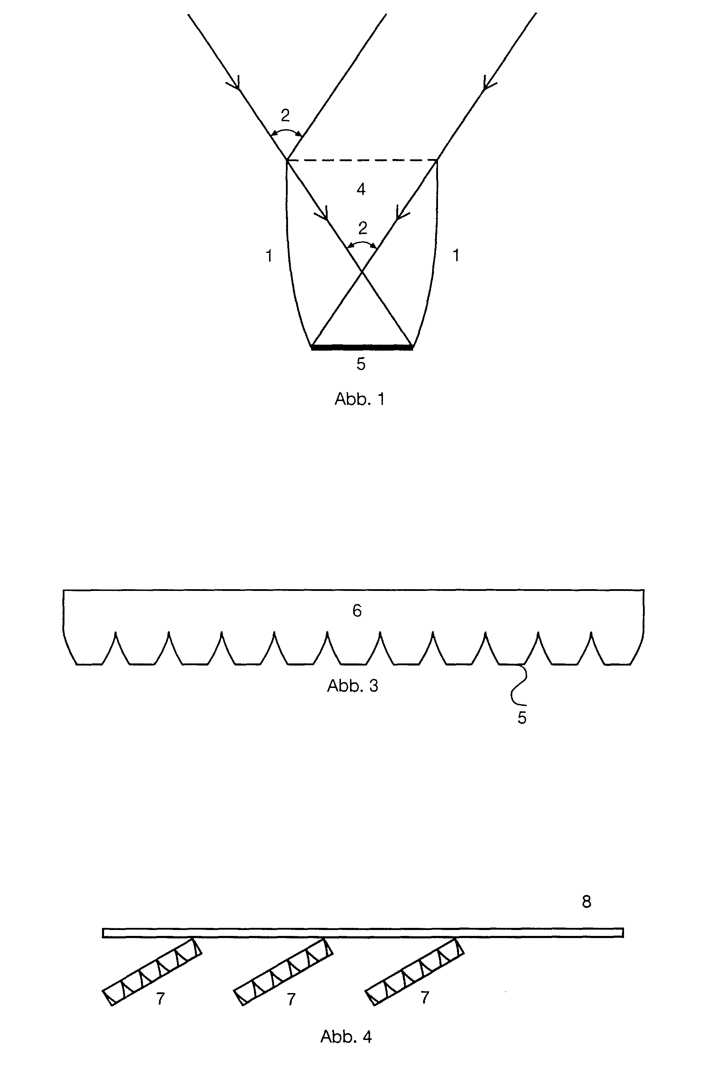

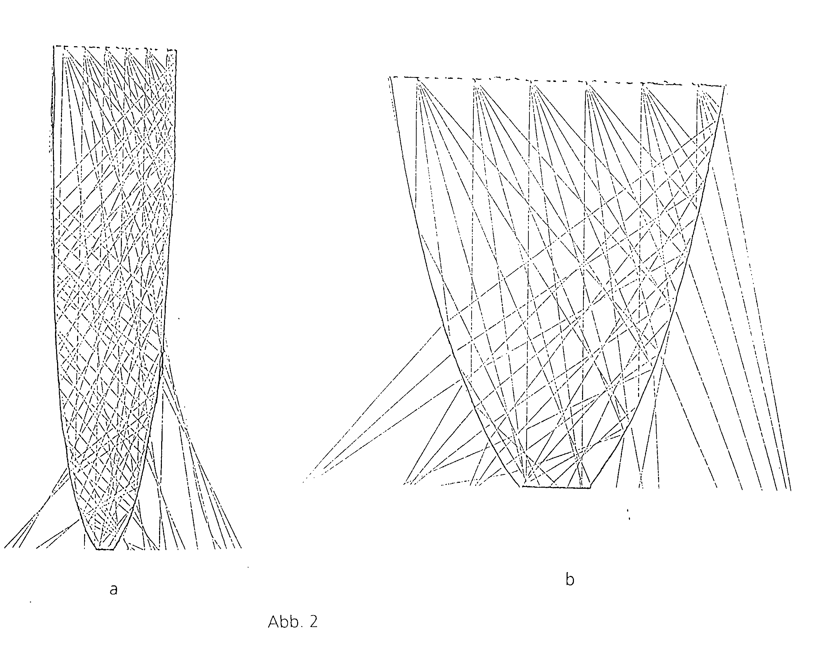

Ein CPC, wie hier verwendet, ist folgendermaßen definiert: Ein linearer Lichtkonzentrator mit ebenen Ein- und Austrittsflächen, dessen Seitenflächen im Schnitt Parabeln sind (1 in Abb. 1), wobei die Fokallinien der Parabelflächen jeweils die der Parabelfläche gegenüberliegende Begrenzung der Konzentrationsaustrittsfläche bilden.

### Kurze Beschreibung der Abbildungen:

- Abb. 1: Schnitt durch einen parabolischen Konzentrator (CPC)
- Abb. 2a: CPC von normaler Länge
- Abb. 2b: CPC auf 0.2 fache Länge gekürzt in anderem Maßstab
- Abb. 3: Schnitt einer direkt an der Verglasung angebrachten Konzentratorstruktur (bei Südausrichtung und in etwa der richtigen Neigung von 30°)
- Abb. 4: Schnitt einer hinter der Verglasung angebrachten Konzentratorstruktur (bei Horizontalverglasung)
- Abb. 5: Schnitt einer hinter der Verglasung angebrachten Konzentratorstruktur (bei Vertikalverglasung)
- Abb. 6: Schnitt durch einen parabolischen Konzentrator mit einer weiteren zusätzlichen Konzentratorstufe
- Abb. 7: Schnitt durch schrägstehende unsymmetrische Konzentratoren
- Abb. 8 - 10: Schnitte durch Konzentratorstrukturen die eine Durchsicht nach außen ermöglichen

Abb. 1 stellt einen Schnitt durch einen parabolischen Trogkonzentrator dar. Die reflektierenden Seitenwände 1 sind Parabelsegmente, der Konzentrator ist senkrecht zur Zeichenebene verlängert zu denken. Der Konzentrator hat in der Schnittebene einen Akzeptanzwinkel 2, innerhalb dessen alle Strahlung auf den Absorber gelenkt wird. Strahlen außerhalb des Akzeptanzwinkels werden reflektiert. Bei der hier gezeigten Ausführung ist der Akzeptanzwinkel senkrecht zur Zeichenebene unbegrenzt, d.h. 180°. Diese Ausführung eignet sich optimal zur nicht nachgeführten Konzentration des Sonnenlichts. Dazu wird die Achse des Trogs in Ost-West-Richtung gelegt und der Akzeptanzwinkel 2 mindestens gleich der doppelten Deklination der Sonnenbahn (23,4°) gewählt und der Konzentrator um den Winkel der geographischen Breite des Aufstellungsorts gegen die Horizontale nach Süden geneigt. Dann liegt die Sonnenbahn in allen Jahreszeiten zum größten Teil innerhalb des Akzeptanzwinkels des Konzentrators, und das direkte Licht kann weitgehend gesammelt werden.

Eine Abwandlung der einfachen CPC Version, die aus einem Trog mit spiegelnden Wänden besteht, verwendet massives transparentes Material 4 mit Brechungsindex n für den Trog. Dann wird nicht nur die erzielbare Konzentration um den Faktor n höher, sondern bei Einhaltung bestimmter Reflexionswinkelbegrenzungen kann auch die Verspiegelung wegfallen, da die Strahlen durch Totalreflexion im Trog geführt werden. In der erfindungsgemäßen Anwendung wird anstelle des Absorbers am Konzentratorende ein Spiegel 5 eingesetzt. Für die Anwendung zur Beleuchtung bei gleichzeitiger Sonnenabschattung sind nun die Strahlen *außerhalb* des Akzeptanzwinkels von besonderer Bedeutung, denn aus den Konstruktionsprinzipien des totalreflektierenden Konzentrators folgt, daß sie durch die Wände 1 hindurchdringen. Durch die Brechung beim Austritt bleibt ihre Richtung jedoch nicht erhalten, was ebenfalls für die Anwendung von Vorteil sein kann.

Sonnenschutzeinrichtungen dienen vor allem dem Schutz vor Überhitzung im Sommer, während im Winter die Sonnenstrahlung zur passiven Sonnenenergienutzung erwünscht ist. Aber auch im Winter hat direkte Sonnenstrahlung in Wohnräumen Nachteile infolge von Blendung und Ausbleichen farbiger Gegenstände. Ein besonderer Vorteil der Erfindung besteht darin, daß der Akzeptanzwinkel 2 in etwa auf das Sommerhalbjahr begrenzt werden kann. Dadurch wird zum einen der Anteil des durchgelassenen diffusen Lichts größer, zum anderen wird das direkte Licht im Winter, das ja außerhalb des Akzeptanzwinkels liegt, als diffuses Licht in die Räume transmittiert. In diesem Fall ist es vorteilhaft, den Neigungswinkel der Eintrittsfläche des Konzentrators nicht gleich der geographischen Breite, sondern flacher, etwa 30° (in Mitteleuropa) gegen die Horizontale zu wählen. Insbesondere im Sommer liegt am Morgen und am Abend die Sonnenbahn außerhalb des Akzeptanzwinkels. Von Interesse ist hier nur der Fall des Sommers, da im Winter ohnehin Durchlässigkeit erwünscht ist. Da aber im Sommer die Sonne zu diesen Zeiten im Norden, d. h. hinter der die Verglasung enthaltenden Hausfassade steht, reicht es aus, den Akzeptanzwinkel für die Zeit zwischen etwa 8 und 16 Uhr Ortszeit auszulegen.

Die Bedingung, daß nur Totalreflexion stattfinden darf, hat zur Folge, daß die Seitenwände des Troges nicht bis zum unteren Abschluß als Parabeln ausgeführt werden können. Der Öffnungswinkel am Ausgang darf bei einem Brechungswinkel von 1,5 maximal 78° betragen. Das hat weiter zur Folge, daß das untere Ende des Konzentrators in der Schnittebene eine Gerade wird.

Bei der bevorzugten Ausführung mit einem Öffnungswinkel von etwa 24° führt die Theorie zu relativ tiefen parabolischen Trögen, die in der Praxis unhandlich wären. Daher ist es günstig, die Konzentratoren abzukürzen, was man in der hier behandelten Anwendung ohne weiteres tun kann. Abb. 2 zeigt einen CPC von normaler Länge (2a) und daneben einen auf die 0,2 fache Länge verkürzten (2b) für einen halben Akzeptanzwinkel von 12. Die beiden Strukturen sind nicht im gleichen Maßstab dargestellt. In der Abbildung ist auch zu sehen, wie Strahlen, die mit verschiedenen Winkeln ankommen, entweder totalreflektiert werden oder durch die Seitenwände hindurchtreten. Für das Material des Konzentrators ist ein Brechungsindex von 1,5 angenommen. Dadurch verändert sich der Akzeptanzwinkel innerhalb des Konzentrators. Das Bild zeigt auch, wie mit Hilfe von Strahlverfolgungsprogrammen (Ray Tracing) die Strukturen berechnet und optimiert werden können. Neben einer geringen Reduktion der möglichen Konzentration hat die Verkürzung vor allem den Effekt, daß die Übergangszonen zwischen dem Akzeptanzbereich und dem nicht auf den Absorber gelangenden Winkelbereich breiter werden. Dies ist für Sonnenenergieumwandlung nachteilig, aber für die Anwendung zur Abschattung eher wünschenswert.

Von Wichtigkeit ist auch, daß die Funktion der Konzentratoren nicht von der absoluten Größe abhängt. Insofern kann man die Strukturen so klein machen, wie es die Fertigungstoleranzen erlauben, wodurch eine geringe Dicke der Elemente und Materialersparnis erzielt wird. Bei Sonnenenergienutzung dagegen ist die Bauhöhe durch die Größe der thermischen Absorber oder der Solarzellen bestimmt.

Ferner ist es vorteilhaft, viele Tröge mit einer gemeinsamen Deckplatte zu verbinden, wodurch leicht handhabbare Elemente entstehen. Abb. 3 zeigt diese Anordnung. Die Deckplatte 6 hat keinen Einfluß auf die optischen Eigenschaften der Konzentratoren, wie man leicht zeigen kann.

Um eine Verschmutzung oder Verstauben der Konzentratorstrukturen zu verhindern, ist möglich, an der Rückseite der Konzentratorplatten eine weitere Glasplatte anzubringen, die mit den Konzentratorplatten durch einen hermetischen Randverbund verbunden ist.

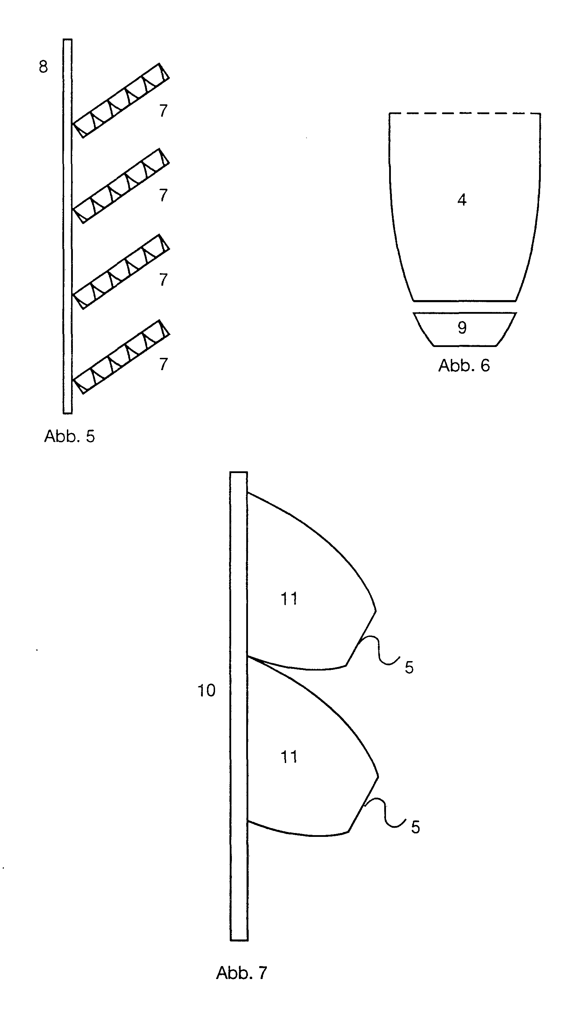

Hinsichtlich der Anordnung bzw. Montage der Konzentratoren in Verglasungen gibt es drei Möglichkeiten:
1. Die Verglasung hat Ausrichtung nach Süden und in etwa die richtige Neigung von etwa 30°. Dann kann ein Element mit Konzentratorstrukturen, wie in Abb.3 direkt an die Verglasung angebracht werden, bzw. als Verglasung dienen.
2. Die Verglasung ist horizontal. Dann werden Lamellen 7 mit aufgebrachten Konzentratorstrukturen unterhalb der äußeren Verglasung 8 im richtigen Winkel angeordnet, wie in Abb. 4 gezeigt. Der Akzeptanzwinkel muß hier größer gewählt werden, als bei nach Süden geneigten Flächen, da die Sonnenbahn einen größeren Raumwinkelbereich einnimmt. Der Abstand der Lamellen wird dabei so gewählt, daß sie sich von oben gesehen mindestens überlappen, da im Sommer die Sonne auch im Norden steht.
3. Die Verglasung ist vertikal (Südfenster). Dann werden ebenfalls Lamellen mit Konzentratoren übereinander mit der richtigen Neigung hinter der Verglasung angeordnet, wie Abb. 5 zeigt. Hier muß ebenfalls der Akzeptanzwinkelbereich vergrößert werden. Die Lamellen haben hier eine Neigung von etwa 45°.

Neigungen, die zwischen den aufgeführten liegen, können entsprechend behandelt werden. Die Lamellenstrukturen können bei Montage einjustiert werden und können dann in fester Position bleiben. Sie können aber auch, insbesondere im Falle der Südfenster hochziehbar sein und/oder in der Neigung verstellbar.

In der Regel wird man die Konzentratoraustrittsflächen mit Spiegeln versehen. Diese können leicht aufgebracht werden, z.B. durch Siebdruckverfahren, da Austrittsflächen alle in einer Ebene liegen. Eine andere Möglichkeit besteht darin, die transparente, ebene Austrittsfläche als Reflektor zu verwenden. Da nämlich der Öffnungswinkel der konzentrierten Strahlung sehr groß ist (±78°) ist, fällt ein sehr großer Teil der Strahlungsenergie in den Totalreflexionskegel an der Austrittsfläche und wird zurückreflektiert. Auf diese Weise hat man die Möglichkeit, etwa 20% des Sonnenlichts zusätzlich zu transmittieren. Diesen Effekt kann man mit einer weiteren Konzentrationsstufe verstärken, wie Bild 6 zeigt. An den Konzentrator 4 schließt sich eine weitere Konzentrationsstufe 9 an. Damit wird die Lichtintensität noch einmal um 80% reduziert. Die Konzentratoren 9 der zweiten Stufe können durch dünne Stege (nicht in der Abb. gezeigt) mit der ersten Stufe verbunden sein.

Bei ebenen Austrittsflächen ergibt sich als Nachteil, daß für kurze Zeit, wenn die Sonne senkrecht auf der Eintrittsebene steht, direktes Sonnenlicht transmittiert wird. Das läßt sich durch eine Aufrauhung der Austrittsfläche vermeiden. Diese Oberfläche wirkt lichtstreuend und hat trotzdem den gleichen Totalreflexionskoeffizienten wie eine glatte Oberfläche, wie aus der Theorie der Optik hervorgeht.

Für von der Südrichtung abweichende Orientierungen sind auch schrägstehende, unsymmetrische Konzentratoren möglich. Diese sind zwar in ihren optischen Eigenschaften den idealen Konzentratoren unterlegen, bieten aber die Möglichkeit größerer Flexibilität. Abb. 7 zeigt ein Beispiel einer schrägen Konzentratoranordnung: Hinter einer Verglasung 10 befinden sich abgeschrägte Konzentratoren. Diese Art von Konzentratoren eignet sich vor allem für Ost- und Westrichtungen. Hier sind auch zweidimensionale, d. h. rotationssymmetrische Ausführungen möglich, die dann vorteilhafterweise auf den Mittelpunkt des auszublendenden Himmelsbereichs ausgerichtet werden. Eine besonders gute Anpassung an vorgegebene Bestrahlungsverhältnisse erhält man, wenn man rechteckige Konzentratoren einsetzt, die aus zwei sich durchdringenden CPC's bestehen. Dabei ist es möglich, die Parabelparameter der senkrecht aufeinander stehenden Begrenzungsflächen verschieden zu wählen, um die Abschattungswirkung genau dem Sonnenlauf anzupassen.

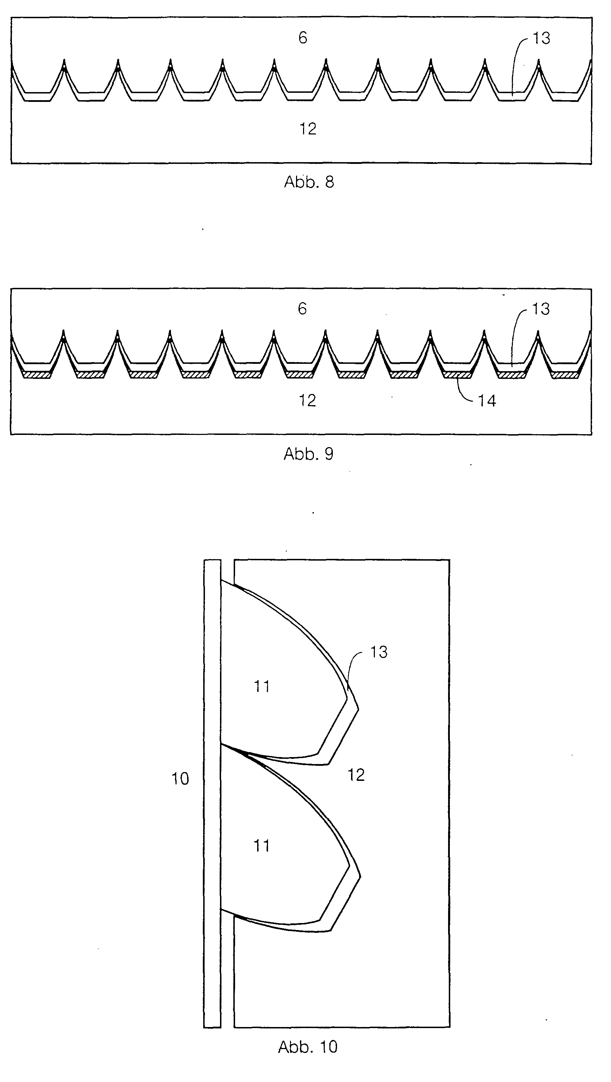

Die bisher beschriebenen Strukturen haben den Nachteil, daß sie keine Durchsicht erlauben. für Wohn- und Büroräume ist jedoch Sichtkontakt nach außen aus Gründen des Komforts wünschenswert. Eine Lösung dieses Problems besteht darin, auf der Rückseite der beschriebenen Strukturen ein weiteres transparentes Element anzuordnen, dessen Oberfläche dem Negativ der Abschattungsstrukturen entspricht. Abb. 8 zeigt diese Anordnung. Gegenüber den Abschattungsstrukturen 6 ist ein Negativelement 12 angeordnet. Zwischen den beiden Elementen liegt ein Luftspalt 13, der bewirkt, daß die Totalreflexion ungehindert stattfinden kann.
In der hier dargestellten Betriebsweise ist die Anordnung nicht durchsichtig. Unter der Voraussetzung, daß 6 und 12 in etwa den gleichen Brechungsindex haben, kann diese Anordnung zwischen der Betriebsweise Abschattung und Durchsicht geschaltet werden. Das kann in verschiedener Weise geschehen: Entweder man füllt den Zwischenraum 13 bei Bedarf mit einer Flüssigkeit, die im Brechungsindex den transparenten Elementen sehr nahe ist, oder man macht die Elemente gegeneinander verschiebbar, dergestalt, daß der Luftspalt entweder geöffnet oder geschlossen werden kann. Dies bereitet jedoch technische Schwierigkeiten, da zur Unterdrückung der Totalreflexion der Zwischenraum kleiner als eine Lichtwellenlänge sein muß, d. h. die Strukturen müßten äußerst präzise gefertigt werden. Diese Schwierigkeit wird umgangen, indem man eines der beiden ineinanderpassenden Elemente mit einer elastisch verformbaren Oberflächenschicht 14 beschichtet, wie in Abb. 9 dargestellt. Diese Schicht, die wiederum im Brechungsindex an die festen Platten angepaßt sein muß, gleicht beim Anpressen Oberflächenunebenheiten aus.

Das Prinzip der Umschaltbarkeit durch Negativstrukturen kann auch auf schrägstehende Strukturen nach Abb. 7 angewandt werden, wie Abb. 10 zeigt.

Alle hier dargestellten Abschattungstechniken können auch zur teilweisen Bedeckung von Verglasungsflächen, z. B. nur im oberen Teil von Fenstern eingesetzt werden.

## Patentansprüche

1. Richtungsselektives Reflexionssystem zur Abschattung des direkten Sonnenlichts für Verglasungen, **dadurch gekennzeichnet, daß** lichtkonzentrierende Strukturen bestehend aus einem transparenten Medium, das direkte und diffuse Sonnenlicht, das aus einem vorgegebenen Bereich des Himmels kommt, mittels Totalreflexion auf eine Zone (5) lenken, die deutlich kleiner ist als die Lichteintrittszone, daß diese Zone ganz oder teilverspiegelt ist und daß das nicht totalreflektierte Licht zur Beleuchtung der dahinterliegenden Räume genutzt wird.

2. Richtungsselektives Reflexionssystem nach Anspruch 1, **dadurch gekennzeichnet, daß** der Akzeptanzwinkel der Konzentratorstrukturen auf den Bereich des Himmels beschränkt ist, der sechs bis acht Monaten Sonnenbahn im Sommerhalbjahr in der Zeit von etwa 8:00 bis 16:00 Uhr Ortszeit entspricht.

3. Richtungsselektives Reflexionssystem nach Anspruch 1-2, **dadurch gekennzeichnet, daß** für nach Süden orientierte oder nach Süden geneigte Verglasungen die konzentrierenden Strukturen zur Kategorie der linearen Compound Parabolic Concentrators (CPCs) gehören und daß diese als Tröge in der Ost-West-Richtung angeordnet sind.

4. Richtungsselektives Reflexionssystem nach Anspruch 1-3, **dadurch gekennzeichnet, daß** die seitlichen Begrenzungsflächen der Konzentratoren in einem Nord-Süd-Querschnitt im oberen Teil aus einem Parabelabschnitt und im unteren Teil aus einer Geraden bestehen, dergestalt, daß der halbe Öffnungswinkel der Lichtstrahlen am Konzentratorende maximal 78° beträgt.

5. Richtungsselektives Reflexionssystem nach Anspruch 1-4, **dadurch gekennzeichnet, daß** der halbe Akzeptanzwinkel der Konzentratoren in Ost-West-Richtung 90° und in Nord-Süd-Richtung 12°-20° beträgt.

6. Richtungsselektives Reflexionssystem nach Anspruch 1-5, **dadurch gekennzeichnet, daß** die Konzentratoren im Vergleich zu idealen Konzentratoren für die vorgegebenen Randbedingungen stark verkürzt sind, wobei der Verkürzungsfaktor zwischen 0,2 und 0,5 liegt

7. Richtungsselektives Reflexionssystem nach Anspruch 1-6, **dadurch gekennzeichnet, daß** die Konzentratorstrukturen kontinuierlich eine größere Fläche bedecken und daß sie fest mit einer durchgehenden Deckplatte mit glatter Oberfläche verbunden sind.

8. Richtungsselektives Reflexionssystem nach Anspruch 1-7, **dadurch gekennzeichnet, daß** die Dicke der Konzentratorstrukturen einschließlich Deckplatte nicht mehr als 2 cm beträgt.

9. Richtungsselektives Reflexionssystem nach Anspruch 1-8, **dadurch gekennzeichnet, daß** die Konzentratorplatten annähernd nach Süden ausgerichtet und um etwa 30° gegen die Horizontale geneigt sind.

10. Richtungsselektives Reflexionssystem nach Anspruch 1-9, **dadurch gekennzeichnet, daß** bei nicht auf etwa 30° geneigten Verglasungen die Konzentratorstrukturen auf Lamellen angebracht sind, die in ihrer Gesamtheit auf einen für die Verglasung optimalen Winkel zwischen 20° -45° einjustiert werden.

11. Richtungsselektives Reflexionssystem nach Anspruch 1-10, **dadurch gekennzeichnet, daß** die Totalreflexion am Ausgang des Konzentrators zur Rückreflexion benützt wird.

12. Richtungsselektives Reflexionssystem nach Anspruch 1-11, **dadurch gekennzeichnet, daß** der Konzentratorausgang aus einer aufgerauhten Oberfläche besteht.

13. Richtungsselektives Reflexionssystem nach Anspruch 1-11, **dadurch gekennzeichnet, daß** am Ausgang des Konzentrators, durch einen Luftspalt getrennt, mindestens eine weitere Konzentratorstruktur angebracht ist.

14. Richtungsselektives Reflexionssystem nach Anspruch 1,2,6-8,11-13 **dadurch gekennzeichnet, daß** die Symmetrielinie der Konzentratoren einen Winkel mit der Ebene der Verglasung bildet.

15. Richtungsselektives Reflexionssystem nach Anspruch 1,2,6-8,11-14, **dadurch gekennzeichnet, daß** die Konzentratoren rotationssymmetrisch sind.

16. Richtungsselektives Reflexionssystem nach Anspruch 1,2,6-8,11-14, **dadurch gekennzeichnet, daß** die Konzentratoren rechteckige Form haben und daß die seitlichen Begrenzungsflächen entsprechend den Ansprüchen 3 und 4 gestaltet sind, und daß die Konzentrationsverhältnisse in den beiden aufeinander senkrecht stehenden Parabel-Gerade-Kombinationen verschieden sind.

17. Richtungsselektives Reflexionssystem nach Anspruch 1,2,6-8,11-15, **dadurch gekennzeichnet, daß** die Konzentratorachse auf den Mittelpunkt des abzuschattenden Himmelsbereichs ausgerichtet ist.

18. Richtungsselektives Reflexionssystem nach Anspruch 1-16, **dadurch gekennzeichnet, daß** die Konzentratorstrukturen auf der der Sonne abgewandten Seite mit einer ebenen, transparenten Platte abgedeckt sind, und daß diese einen hermetischen Randverbund mit der Konzentratorplatte hat.

19. Richtungsselektives Reflexionssystem nach Anspruch 1-9,11,14-16, **dadurch gekennzeichnet, daß** sich auf der Rückseite der Konzentratorstrukturen ein zweites plattenförmiges Element befindet, das den gleichen Brechungsindex hat, dessen den Konzentratorstrukturen zugewandte Oberfläche die negativen Konzentratorstrukturen enthält und das durch einen Luftspalt vom ersten Element getrennt ist.

20. Richtungsselektives Reflexionssystem nach Anspruch 19, **dadurch gekennzeichnet, daß** der Luftspalt reversibel mit einer Flüssigkeit gefüllt werden kann, die im Brechnungsindex dem Material der transparenten Platten sehr nahe kommt.

21. Richtungsselektives Reflexionssystem nach Anspruch 19, **dadurch gekennzeichnet, daß** durch mechanische Bewegung der Luftspalt zwischen den strukturierten Platten geöffnet oder geschlossen werden kann.

22. Richtungsselektives Reflexionssystem nach Anspruch 19 und 21, **dadurch gekennzeichnet, daß** eine oder beide strukturierte Oberflächen mit einer transparenten elastischen Schicht eines Materials mit Brechnungsindex ähnlich dem der beiden Platten beschichtet sind.

23. Richtungsselektives Reflexionssystem nach Anspruch 19-22, **dadurch gekennzeichnet, daß** die Regelung der Flüssikeitsfüllung oder der mechanischen Bewegung der Elemente automatisch durch ein Kontrollelement geschieht, das auf das Vorhandensein direkter Sonnenstrahlung anspricht.

## Claims

1. Directionally selective reflection system to provide shading from direct sunlight for glazing, **characterised in that** light-concentrating structures comprising a transparent medium deflect, by means of total reflection, the direct and diffuse sunlight emanating from a predetermined region of the sky, onto a zone (5) which is considerably smaller than the light entry zone, **in that** this zone is wholly or partially mirror-coated and **in that** the light which is not totally reflected is used to illuminate the rooms lying behind said zone.

2. Directionally selective reflection system according to claim 1, **characterised in that** the acceptance angle of the concentrator structures is limited to the region of the sky which corresponds to the sun's path over six to eight months in the summer half-year in the time from roughly 8:00 to 16:00 hours local time.

3. Directionally selective reflection system according to claims 1 to 2, **characterised in that** for glazing orientated towards the south or inclined towards the south, the concentrating structures fall into the category of linear compound parabolic concentrators (CPCs) and that the latter are disposed as troughs in an east-west direction.

4. Directionally selective reflection system according to claims 1 to 3, **characterised in that** the lateral boundary surfaces of the concentrators in a north-south cross-section comprise a segment of a parabola in the upper portion and a straight line in the lower portion, in such a way that half the spread angle of the light beams at the concentrator end is 78° at the most.

5. Directionally selective reflection system according to claims 1 to 4, **characterised in that** half the acceptance angle of the concentrators is 90° in an east-west direction and 12°-20° in a north-south direction.

6. Directionally selective reflection system according to claims 1 to 5, **characterised in that** the concentrators are severely shortened by comparison with ideal concentrators for the predetermined boundary conditions, the shortening factor lying between 0.2 and 0.5.

7. Directionally selective reflection system according to claims 1 to 6, **characterised in that** the concentrator structures continuously cover a largish area and **in that** they are securely connected to a continuous cover plate which has a smooth surface.

8. Directionally selective reflection system according to claims 1 to 7, **characterised in that** the thickness of the concentrator structures including the cover plate is not more than 2 cm.

9. Directionally selective reflection system according to claims 1 to 8, **characterised in that** the concentrator plates are orientated approximately towards the south and are inclined by roughly 30° in respect of the horizontal.

10. Directionally selective reflection system according to claims 1 to 9, **characterised in that** in the case of glazing which is not inclined by roughly 30°, the concentrator structures are attached to fins which are adjusted in their entirety to an optimal angle for the glazing of between 20° and 45°.

11. Directionally selective reflection system according to claims 1 to 10, **characterised in that** the total reflection at the exit of the concentrator is used for back reflection.

12. Directionally selective reflection system according to claims 1 to 11, **characterised in that** the concentrator exit comprises a roughened surface.

13. Directionally selective reflection system according to claims 1 to 11, **characterised in that** at least one additional concentrator structure is attached at the exit of the concentrator, separated by an air gap.

14. Directionally selective reflection system according to claims 1,2,6-8, 11-13, **characterised in that** the bisecting line of the concentrators forms an angle with the plane of the glazing.

15. Directionally selective reflection system according to claims 1,2,6-8,11-14, **characterised in that** the concentrators are rotationally symmetrical.

16. Directionally selective reflection system according to claims 1,2,6-8,11-14, **characterised in that** the concentrators are rectangular in shape and that the lateral boundary surfaces are formed according to claims 3 and 4, and **in that** the concentration ratios in the two parabola-straight line combinations, which sit perpendicular to one another, are different.

17. Directionally selective reflection system according to claims 1,2,6-8,11-15, **characterised in that** the concentrator axis is aligned with the centre point of the region of the sky from which shade is to be provided.

18. Directionally selective reflection system according to claims 1-16, **characterised in that** the concentrators are covered on the side remote from the sun with a flat, transparent plate, and **in that** the latter is hermetically connected to the concentrator plate at the edges.

19. Directionally selective reflection system according to claims 1-9,11,14-16, **characterised in that** there is located on the rear side of the concentrator structures a second plate-shaped element, which has the same refractive index, the surface of which facing the concentrator structures contains the negative concentrator structures and which is separated from the first element by an air gap.

20. Directionally selective reflection system according to claim 19, **characterised in that** the air gap can be reversibly filled with a fluid which in respect of refractive index comes very close to the material of the transparent plates.

21. Directionally selective reflection system according to claim 19, **characterised in that** the air gap between the structured plates can be opened or closed by mechanical movement.

22. Directionally selective reflection system according to claims 19 and 21, **characterised in that** one or both structured surfaces is/are coated with a transparent resilient layer of a material having a refractive index similar to that of the two plates.

23. Directionally selective reflection system according to claims 19-22, **characterised in that** the adjustment of the fluid filling or of the mechanical movement of the elements takes place automatically by means of a control element which responds to the presence of direct solar radiation.

## Revendications

1. Système de réflexion à sélectivités directionnelles pour l'ombrage de surfaces vitrées contre la lumière directe du soleil,
**caractérisé en ce que**
des structures de concentration de lumière formées d'un milieu transparent renvoient la lumière solaire directe et diffuse venant d'une zone prédéterminée du ciel, par réflexion totale sur une zone (5) beaucoup plus petite que la zone d'entrée de lumière,
cette zone est en partie ou en totalité en forme de surface de miroir et la lumière non totalement réfléchie est utilisée pour éclairer les locaux situés derrière ces structures.

2. Système de réflexion à sélectivités directionnelles selon la revendication 1,
**caractérisé en ce que**
l'angle d'acceptance des structures de concentration est limité à la plage du ciel qui correspond pour six à huit mois à la trajectoire solaire pendant la demi-année d'été, pour l'heure locale entre environ 8h00 et 16h00.

3. Système de réflexion à sélectivités directionnelles selon les revendications 1 et 2,
**caractérisé en ce que**
pour les vitrages orientés vers le sud ou inclinés vers le sud, les structures de concentration appartiennent à la catégorie des concentrateurs paraboliques composés, linéaire (CPC) et ils sont installés comme des goulottes dans la direction Est/Ouest.

4. Système de réflexion à sélectivités directionnelles selon les revendications 1 à 3,
**caractérisé en ce que**
les surfaces de limitation latérales des concentrateurs selon une section Nord/Sud, sont formées dans la partie supérieure, d'un segment de parabole et dans la partie inférieure de droites de façon que le demi angle d'ouverture des rayons lumineux à l'extrémité du concentrateur est au maximum de 78°.

5. Système de réflexion à sélectivités directionnelles selon les revendications 1 à 4,
**caractérisé en ce que**
les demi-angles d'acceptance des concentrateurs dans la direction Est/Ouest de 90° et dans la direction Nord/Sud 12 - 20°.

6. Système de réflexion à sélectivités directionnelles selon les revendications 1 à 5,
**caractérisé en ce que**
les concentrateurs sont fortement raccourcis par comparaison à des concentrateurs idéaux pour les conditions limites prédéterminées, le coefficient de raccourcissement étant compris 0,2 - 0,5.

7. Système de réflexion à sélectivités directionnelles selon les revendications 1 à 6,
**caractérisé en ce que**
les structures de concentrateur couvrent en continu une surface importante et sont reliées à une plaque de couverture continue ayant une surface supérieure lisse.

8. Système de réflexion à sélectivités directionnelles selon les revendications 1 à 7,
**caractérisé en ce que**
l'épaisseur des structures de concentrateur y compris la plaque de recouvrement n'est pas supérieure à 2 cm.

9. Système de réflexion à sélectivités directionnelles selon les revendications 1 et 4,
**caractérisé en ce que**
les plaques de concentrateur sont dirigées sensiblement vers le sud et sont inclinées de l'ordre de 30° par rapport à la direction horizontale.

10. Système de réflexion à sélectivités directionnelles selon les revendications 1 à 9, **caractérisé en ce que**
pour les vitrages qui ne sont pas inclinés à environ 30°, les structures de concentration sont donc installées sur des lamelles qui sont ajustées globalement suivant un angle optimum compris entre 20° et 45° pour les vitrages.

11. Système de réflexion à sélectivités directionnelles selon les revendications 1 à 10,
**caractérisé en ce que**
la réflexion totale est utilisée à la sortie du concentrateur pour assurer la réflexion en retour.

12. Système de réflexion à sélectivités directionnelles selon les revendications 1 à 11, **caractérisé en ce que**
la sortie du concentrateur est formée d'une surface supérieure rugueuse.

13. Système de réflexion à sélectivités directionnelles selon les revendications 1 à 11, **caractérisé en ce qu'**
à la sortie du concentrateur, il y au moins une autre structure de concentrateur, séparé par un intervalle d'air.

14. Système de réflexion à sélectivités directionnelles selon les revendications 1, 2, 6 - 8, 11 - 13
**caractérisé en ce que**
l'axe de symétrie des concentrateurs fait un angle par rapport au plan du vitrage.

15. Système de réflexion à sélectivités directionnelles selon les revendications 1, 2, 6 - 8, 11 à 14,
**caractérisé en ce que**
les concentrateurs sont symétriques en rotation.

16. Système de réflexion à sélectivités directionnelles selon les revendications 1, 2, 6- 8, 11 - 14,
**caractérisé en ce que**
les concentrateurs ont une forme rectangulaires et les surfaces limites latérales sont réalisées selon les revendications 3 et 4 et les rapports de concentrations dans les deux combinaisons parabole/droite, perpendiculaire sont différents.

17. Système de réflexion à sélectivités directionnelles selon les revendications 1, 2, 6 - 8, 11 - 15,
**caractérisé en ce que**
l'axe de concentrateur est dirigé au centre de la zone du ciel à ombrer.

18. Système de réflexion à sélectivités directionnelles selon les revendications 1 à 16,
**caractérisé en ce que**
les structures de concentrateur sont couvertes par une plaque transparente plane du côté non tourné vers le soleil et la plaque est reliée hermétiquement par le bord à la plaque de concentrateur.

19. Système de réflexion à sélectivités directionnelles selon les revendications 1 - 9, 11, 14 - 16,
**caractérisé en ce que**
le côté arrière des structures de concentrateur comporte un second élément en forme de plaque ayant le même indice de réfraction et dont la surface supérieure tournée vers les structures de concentrateur contient des structures négatives des concentrateurs et est séparée du premier élément par un intervalle d'air.

20. Système de réflexion à sélectivités directionnelles selon la revendication 19,
**caractérisé en ce que**
l'intervalle d'air est rempli de manière réversible d'un liquide dont l'indice de réfraction est très voisin de celle des plaques transparentes.

21. Système de réflexion à sélectivités directionnelles selon la revendication 19,
**caractérisé en ce que**
l'intervalle d'air entre les structurées peut être ouvert ou fermé mouvement mécanique.

22. Système de réflexion à sélectivités directionnelles selon les revendications 19 et 21,
**caractérisé en ce que**
une ou les deux surfaces supérieures sont munies d'une couche élastique transparente d'une matière dont l'indice de réfraction est analogue à celle des deux plaques.

23. Système de réflexion à sélectivités directionnelles selon les revendications 19 à 22,
**caractérisé en ce que**
la régulation du remplissage de liquide ou du mouvement mécanique des éléments est assurée automatiquement par un élément de commande qui répond à la présence d'un rayonnement solaire directe.
